# EUROPÄISCHE PATENTANMELDUNG

(11) **EP 1 992 833 A2**
(43) Veröffentlichungstag der Anmeldung: **19.11.2008**
(21) Anmeldenummer: 08014267.2
(22) Anmeldetag: 16.09.2006
(51) Int. Cl.: F16D 65/21

(54) **Bremsbetätigungsvorrichtung**

(30) Priorität: 15.10.2005 DE 102005049431
(62) Teilanmeldung aus: 06019432.1
(71) Anmelder: LuK Lamellen und Kupplungsbau Beteiligungs KG, 77815 Bühl (DE)
(72) Erfinder: Greb, Peter, 77815 Bühl (DE); Man, Laszlo, 77833 Ottersweiler-Unzhurst (DE); Friedmann, Oswald, 77839 Lichtenau (DE)

(57) **Zusammenfassung**

Die Erfindung schafft eine Bremsbetätigungsvorrichtung, insbesondere zur Betätigung einer Rad- bzw. Betriebsbremse eines Kraftfahrzeuges, mit mindestens einer Feder, deren Federkraft zur wahlweisen Betätigung der Radbremse mittels einer zugeordneten mechanischen Kraftübertragungsstrecke auf die Radbremse übertragbar ist, wobei zur Modulation einer Bremskraft ein Hebel als Teil der Kraftübertragungsstrecke verschwenkbar ausgebildet ist. Alternativ können auch mehrere Kraftübertragungselemente gleichmäßig über den Umfang des Bremsaktors verteilt und mehrfach vorgesehen sein.

## Beschreibung

Die vorliegende Erfindung betrifft eine elektromechanische Bremsbetätigungsvorrichtung gemäß Patentanspruch 1 oder 14.

Bisher wurden Bremsen an Kraftfahrzeugen beispielsweise mittels eines hydraulischen Systems betätigt. Dazu wurde von einem Fahrer des Kraftfahrzeuges ein Bremspedal nieder gedrückt, welches über einen Bremskraftverstärker ein hydraulisches Fluid im Bremssystem derart unter Druck setzt, dass von einem Radbremszylinder ein Bremsbelag der Radbremse an eine Bremsscheibe gedrückt wird. Der Radbremszylinder wird dabei von dem hydraulischen Fluid mit Druck beaufschlagt.

Solche hydraulischen Systeme haben zahlreiche Nachteile, von denen im Folgenden einige genannt werden. Hydraulische Fluide enthalten aggressive und umweltschädliche Substanzen, wobei die Feuergefahr nicht zu unterschätzen ist. Die mechanische Kopplung des Bremspedals mit dem hydraulischen System führt zur Weiterleitung von Vibrationen in den Fahrzeuginnenraum, beispielsweise wenn das ABS-System des Bremssystems aktiviert wird; das Bremspedal ist mechanisch mit den Bremssystem-Komponenten im Motorraum des Kraftfahrzeuges verbunden, so dass bei einem Unfall, wie etwa einem Frontalaufprall, die Gefahr besteht, dass das Bremspedal in den Innenraum des Kraftfahrzeuges eindringt und den Fahrer verletzen kann.

Ausgehend von diesem Stand der Technik besteht daher die Aufgabe der vorliegenden Erfindung darin, eine Bremsbetätigungsvorrichtung zu schaffen, welche die Nachteile eines hydraulischen Systems beseitigt.

Diese Aufgabe wird gelöst durch eine Bremsbetätigungsvorrichtung mit den Merkmalen des Patentanspruchs 1 oder 14.

Demnach weist die erfindungsgemäße Bremsbetätigungsvorrichtung, die insbesondere zur Betätigung einer Radbremse eines Kraftfahrzeuges vorgesehen ist, mindestens eine Feder auf, deren Federkraft zur wahlweisen Betätigung der Radbremse mittels einer zugeordneten mechanischen Kraftübertragungsstrecke auf die Radbremse übertragbar ist, wobei zur Modulation einer Bremskraft ein Hebel als Teil der Kraftübertragungsstrecke verschwenkbar ausgebildet ist.

Alternativ weist die erfindungsgemäße Bremsbetätigungsvorrichtung, zur Betätigung einer Radbremse eines Kraftfahrzeuges mindestens eine Feder auf, deren Federkraft zur wahlweisen Betätigung der Radbremse mittels einer zugeordneten mechanischen Kraftübertragungsstrecke auf die Radbremse übertragbar ist, wobei die Kraftübertragungsstrecke zumindest ein verlagerbares Kraftübertragungselement umfasst, welches als tangential zu einer Rotationsachse der Radbremse gelagerter Hebel ausgebildet ist.

Mit der erfindungsgemäßen Bremsbetätigungsvorrichtung können zahlreiche Vorteile erreicht werden. Bei der vorgeschlagenen elektromechanischen Bremsbetätigungsvorrichtung reicht eine elektrische Verbindung zwischen einem Bremspedal und einem Steuergerät der Bremsbetätigungsvorrichtung, welches den Elektromotor geeignet ansteuert. Dadurch ist die Gestaltungsfreiheit bei der Entwicklung des Bremspedals bzw. Pedalmoduls deutlich verbessert. Zudem werden in Folge der mechanischen Entkopplung keine Vibrationen mehr auf das Bremspedal übertragen, die bei bekannten hydraulischen Bremssystemen bei der Aktivierung des ABS-Systems verursacht und übertragen werden. Das mechanisch von den Bremssystem-Komponenten in einem Motorraum des Kraftfahrzeuges entkoppelte Bremspedal kann außerdem bei einem Unfall nicht mehr in die Fahrgastzelle eindringen. Herkömmlicherweise benutzte Bremsflüssigkeit besteht aus aggressiven und gesundheitsgefährdenden Bestandteilen. Durch den Wegfall der Bremsflüssigkeit wird zudem eine mögliche Ursache für Fahrzeugbrände beseitigt.

Die elektromechanische Bremsbetätigungsvorrichtung nach der vorliegenden Erfindung lässt es auf besonders einfache Art und Weise zu, jedes Rad bzw. jede Radbremse einzeln anzusteuern (Radselektiver Eingriff) Der Aufwand an Bauteilen und hydraulischen Steuerungen entfällt bei der vorliegenden Erfindung vollständig. Insbesondere die Parkbremse bzw. Feststellbremse lässt sich auf einfachste Art und Weise und praktisch ohne zusätzlichen baulichen Aufwand in die erfindungsgemäße Bremsbetätigungsvorrichtung integrieren. Auch die Integration der Bremsfunktion in bekannte Fahrstabilitätsprogramme ist infolge der elektrischen Ansteuerung der Bremsbetätigungsvorrichtung sehr einfach.

Der erfindungsgemäße Drehhebelaktor umfasst ein Aus- bzw. Einrücksystem, welches rotatorisch um die Zentralachse des Bremsaktors angeordnet ist und dieses System daher auch rotatorisch betätigt. Der bzw. die Hebel sind tangential um die Zentralachse des Bremsaktors angeordnet. Hierdurch wird einerseits der kompakte Aufbau der Bremsbetätigungsvorrichtung ermöglicht und andererseits ist nur eine geringe Betätigungskraft zum Verlagern der tangential angeordneten Hebel notwendig.

Vorzugsweise sind die mehreren Hebel am Umfang gleichmäßig verteilt vorgesehen, wobei die Hebel bevorzugt durch Laufrollen betätigt werden. Die Laufrollen werden auf einer Kreisbahn bewegt und betätigen die Hebel, wobei jeder Hebel an zwei weiteren Abstützpunkten gelagert ist.

Insbesondere sind alle Laufrollen in einem gemeinsamen Trägerrad gelagert, welches vorteilhafter Weise mittels eines Elektromotors betätigbar, d.h. verdrehbar ist.

Die Erfindung soll anhand zugehöriger Zeichnungen näher erläutert werden.

Es zeigen:
- Figur 1:: den prinzipiellen Aufbau einer erfindungsgemäßen Bremsbetätigungsvorrichtung nach einer ersten Ausführungsform;
- Figur 2:: eine weitere Ausführungsform einer erfindungsgemäßen Bremsbetätigungsvorrichtung in schematischer Darstellung;
- Figur 3:: die Bremsbetätigungsvorrichtung nach Figur 2 in einer Querschnittansicht
- Figur 4:: eine Draufsicht auf die Laufrollen und die Hebel der erfindungsgemäßen Bremsbetätigungsvorrichtung

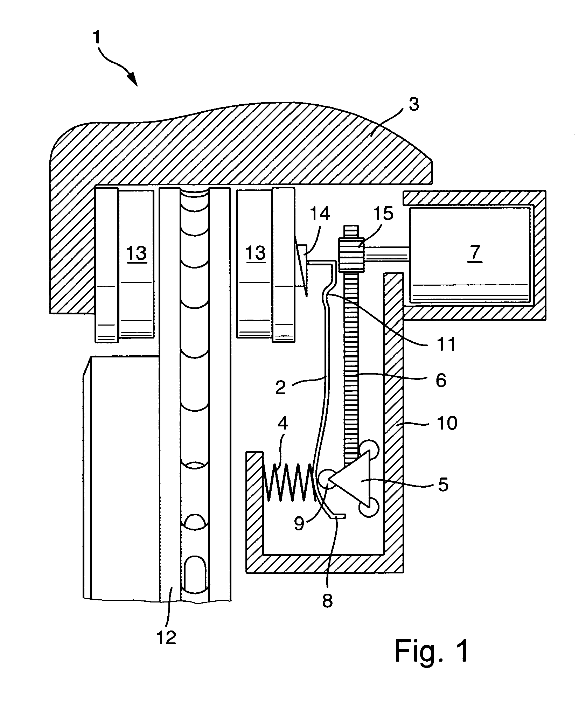

In der Figur 1 ist der prinzipielle Aufbau einer erfindungsgemäßen Bremsbetätigungsvorrichtung nach einer ersten bevorzugten Ausführungsform gezeigt, wobei eine Radbremse 1 im Teilquerschnitt dargestellt ist. Neben einer Bremsscheibe 12 sind die beiden Bremsbeläge 13 dargestellt, die von einem Bremssattel 3 gehalten werden. In dem Bremssattel 3 ist die erfindungsgemäße Bremsbetätigungsvorrichtung integriert. Die Betätigung der Radbremse 1 erfolgt gemäß der vorliegenden Erfindung durch einen innerhalb des Bremssattels angeordneten linearen Hebeleinrücker, dessen Hebel 2 direkt oder indirekt über eine geeignete Verschleißnachstellung 14 auf den oder die Bremsbeläge 13 wirkt.

Als Kraftspender dient eine Feder 4, beispielsweise eine Druckfeder, die sich einerseits an einem Gestell 10 des Bremssattels 3 abstützt und die andererseits auf ein federseitiges Ende des Hebels 2 einwirkt. Der Hebel 2 stützt sich federseitig an der Feder 4 ab, sowie an einer Rolle 9 eines Laufwagens 5 und bremsbelagseitig am Bremsbelag 13. Der Hebel 2 weist dabei einen nicht-linearen Aufbau auf. Der Hebel 2 weist eine gebogene Form auf. Der Hebel 2 besitzt am bremsbelagseitigen Ende eine Vertiefung 11, in der die hebelseitige Rolle 9 des Laufwagens 5 in einem stromlosen Zustand eines Elektromotors 7 gehalten wird. Der Elektromotor 7 treibt über ein Getriebe 15 eine Spindel 6 an, die wiederum den Laufwagen 5 antreibt.

Wird der Elektromotor 7 mit Strom versorgt, so kann über das Getriebe 15 und die Spindel 6 der Laufwagen 5 entlang des Hebels 2 verlagert bzw. verschoben werden. Dabei stützt sich der Laufwagen 5 mit zwei gestellseitigen Rollen am Gestell 10 ab.

Ist die Rolle 9 des Laufwagens 5 in der Vertiefung 11 positioniert, so wird auch im stromlosen Zustand des Elektromotors 7 der Hebel 2 derart gegen den Bremsbelag 13 gedrückt, dass die Feststellbremse in Funktion ist. Durch Bestromen des Elektromotors 7 und Verfahren der Rolle 9 bzw. des Laufwagens 5 aus der Vertiefung 11 heraus, wird die Feststellbremse gelöst.

Zur Betätigung der Radbremse 1 wird also nach der vorliegenden Erfindung der Laufwagen 5 mittels eines Antriebs durch den Elektromotor 7 entlang des Hebels 2 verlagert. Die am federseitigen Ende des Hebels 2 eingeleitete Federkraft wird durch die Hebelarme - ein erster Hebelarm ist definiert durch den Abstand zwischen dem Krafteinleitungspunkt der Feder 4 und dem Kontaktpunkt zwischen der Rolle 9 und dem Hebel 2, sowie der zweite Hebelarm definiert ist durch den Abstand zwischen dem Kontaktpunkt zwischen der Rolle 9 und dem Hebel 2 und dem Kraftausleitungspunkt am belagseitigen Ende des Hebels 2 - am Hebel 2 übersetzt, so dass das belagseitige Ende des Hebels 2 dementsprechend auf den Bremsbelag 13 drückt und die Radbremse 1 aktiviert ist.

Zur Modulation der Bremskraft wird der Laufwagen 5 mittels Elektromotor 7 verstellt.

Am federseitigen Ende des Hebels 2 ragt das Hebelende 8 über den Krafteinleitungspunkt der Feder 4 hinaus. Wird der Laufwagen 5 mit seiner Rolle 9 in diesen Bereich des überstehenden Hebelendes 8 (unteres Ende des Hebels 2 in der Figur 1) verfahren, so werden aufgrund der dann umgekehrt vorliegenden Hebelverhältnisse die Bremsbeläge 13 aktiv von der Bremsscheibe 12 weg gezogen. Dazu müssen die Verbindungselemente zwischen dem Hebel 2 und dem Bremsbelag 13 so gestaltet sein, dass sie sowohl Druck- als auch Zugkräfte übertragen können.

Die aktive Offnungsmöglichkeit der Radbremse 1 bietet viele Vorteile im Brems-Modulationsverhalten, insbesondere bei geringem Reibwert zwischen einem Radreifen (nicht dargestellt) und einer Fahrbahn (niedriger µ-Wert).

Eine weitere, nicht dargestellte Ausführungsform der vorliegenden Erfindung für das aktive Öffnen der Radbremse 1 zeichnet sich dadurch aus, dass die Bremsbeläge 13 federbelastet aufgedrückt und die Bremsbeläge 13 entsprechend durch solche Federn von der Bremsscheibe 12 weg gedrückt werden, sobald der Laufwagen 5 den Krafteinleitungspunkt der Feder 4 erreicht, bzw. diesen überfährt. Bei dieser Ausführungsform muss dann der Hebel 2 nicht über den Krafteinleitungspunkt der Feder 4 hinausragen bzw. muss der Hebel 2 kein verlängertes Hebelende 8 aufweisen. Ein weiterer Vorteil dieser Ausführungsform ist, dass dann die Verbindungselemente zwischen dem Hebel 2 und dem Bremsbelag 13 keine Zugkräfte übertragen.

Einige weitere Vorteile, die sich aus einem solchen Aufbau einer elektromechanischen Bremsbetätigungsvorrichtung für eine Radbremse eines Kraftfahrzeuges ergeben, sind:
- Individuell gestaltbares Pedalmodul. Durch die elektromechanische Bremsbetätigungsvorrichtung reicht eine elektrische Verbindung zwischen einem Bremspedal und einem Steuergerät der Bremsbetätigungsvorrichtung, welches den Elektromotor 7 geeignet ansteuert. Dadurch ist die Gestaltungsfreiheit bei der Entwicklung des Bremspedals bzw. Pedalmoduls deutlich verbessert.
- Mit der vorliegenden Erfindung kann insbesondere im "low-µ-Bereich", das heißt bei niedrigen Reibbeiwerten des Fahrbahnbelags, ein schnelles und aktives Öffnen der Radbremse erfolgen.

Des Weiteren lässt sich das Übersetzungsverhältnis bzw. die Übersetzungsverteilung am Hebel 2 durch Anpassung der so genannten Wippkurve über den Aktorweg frei einstellen. Je nach Krümmung bzw. Biegung des Hebels 2 wird durch den Laufwagen 5 bzw. die Rolle 9, die den Kontaktpunkt zum Hebel 2 darstellt, der durch das Hebelverhältnis vorgegebenen Betätigungskraft ein bestimmter, der Kraft-/Wegkennlinie der Bremse zugeordneter Betätigungsweg vorgegeben. Durch Auslegung der Wippkurve derart, dass bei Stromausfall der Bremsaktor selbsttätig öffnet, kann im Notfall sichergestellt werden, dass die elektromechanische Bremse öffnet.

Die geringen bewegten Massen innerhalb des Aktors führen zu einer hohen Dynamik, d.h., dass die erfindungsgemäße Bremsbetätigungsvorrichtung extrem schnelle Modulationszyklen der Bremskraft ermöglicht.

Ein weiterer Vorteil ist, dass die erfindungsgemäße Bremsbetätigungsvorrichtung bezüglich ihrer Betätigungskraft unempfindlich gegen Reibwertschwankungen an der Radbremse ist.

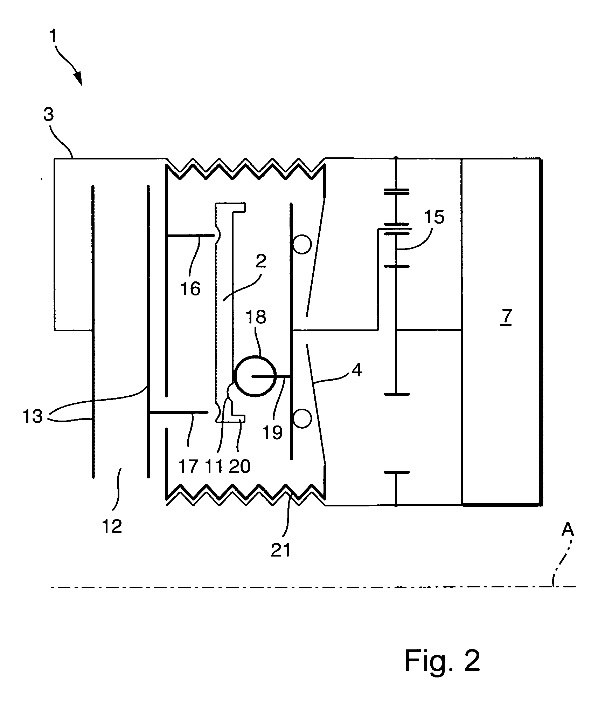

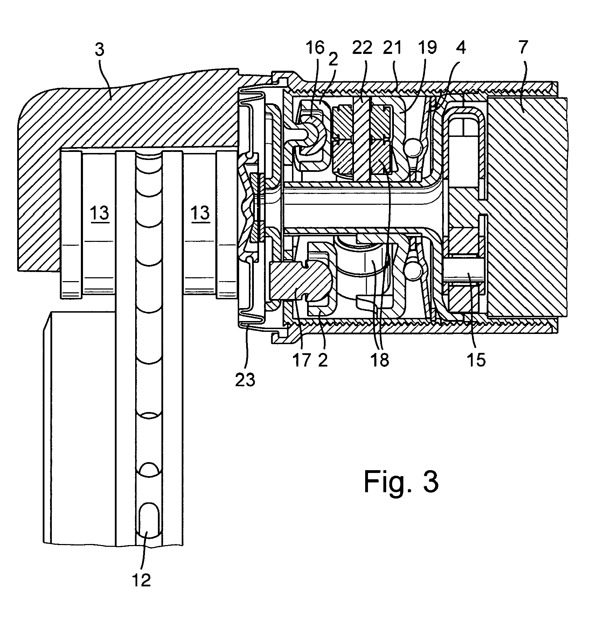

In den Figuren 2 bis 4 ist eine zweite bevorzugte Ausführungsform nach der vorliegenden Erfindung dargestellt.

Gemäß der zweiten Ausführungsform nach der Erfindung sind mehrere Hebel 2 am Umfang eines Bremsaktors gleichmäßig verteilt angeordnet, wobei jeder Hebel 2 über eine zugeordnete Laufrolle 18 derart verlagerbar ist, dass ein Bremsbelag 13 gegen die Bremsscheibe 12 fest andrückbar ist. Diese Ausführungsform wird auch Drehhebelaktor genannt, da die Laufrollen 18 beim Betätigen nicht linear verschoben, sondern um eine zentrale Achse gedreht werden.

In dieser Ausführungsform sind mehrere (mindestens drei, wie dargestellt) ringsegmentförmige Hebel 2 gleichmäßig am Umfang verteilt angeordnet. Die Funktion des Laufwagens 5 nach der ersten Ausführungsform übernimmt bei der zweiten Ausführungsform das Trägerrad 19 mit je einer Laufrolle 18 pro Hebel 2, die jeweils auf einer Achse 22 gelagert sind. Die Funktion der gestellseitigen Laufrollen nach der ersten Ausführungsform übernimmt das Axiallager 24 in der zweiten Ausführungsform. Durch Verdrehen des Trägerrades 19 wird das Hebelverhältnis für die Betätigungskraft der Radbremse 1 eingestellt. Eine gemeinsame Feder 4, beispielsweise eine Tellerfeder oder ein Tellerfederpaket, dient dabei als Kraftspender und wirkt über Druckstifte 16 auf jeweils ein Ende der Hebel 2. Der Antrieb des Trägerrades 19 kann direkt erfolgen oder mittels einem dem Elektromotor 7 nach geschalteten Getriebe 15 mit einer frei wählbaren Übersetzung.

Jeder Hebel 2 ist gegenüber der Feder 4 und den gemeinsam auf den Bremsbelag 13 einwirkenden Betätigungsstiften 17 jeweils kugelgelenkartig gelagert. Dadurch können sich die Hebel 2 entsprechend der durch die Laufrollen 18 vorgegebenen radialen Winkelstellung und der durch den Einrückweg einerseits und den (Teller-) Federweg andererseits vorgegebenen, tangentialen Winkelstellung frei einstellen.

Die Hebel 2 besitzen am belagseitigen Ende eine Vertiefung 11 mit einem Anschlag 20 für die Laufrollen 18. Die Vertiefung 11 dient als Parkstellung, da dann die Laufrollen 18 auch im stromlosen Zustand des Elektromotors 7 in dieser geschlossenen Bremsstellung gehalten werden. Der Anschlag 20 dient zum Nachstellen der Radbremse 1 bei Belagverschleiß. Hierbei wird der komplette Aktor bzw. Drehhebelaktor in einem um den Aktor angeordneten Feingewinde 21 dadurch verdreht, dass die Laufrollen 18 gegen den Anschlag 20 gefahren werden und bei weiterem Verdrehen des Trägerrades 19 der Aktor mit verdreht wird und das Feingewinde 21 eine axiale Bewegung des Aktors bewirkt.

Beim Zurückdrehen des Trägerrades 19 verbleiben die Laufrollen 18 solange in der Vertiefung 11 für die Parkstellung, und drehen den Aktor innerhalb des Feingewindes 21 zurück, bis die Bremsbeläge 13 von der Bremsscheibe 12 abheben und die Haltekraft in der Vertiefung 11 nicht mehr ausreicht, um die Laufrollen 18 zu arretieren und den Aktor weiter zu verdrehen. Bei einer weiteren Verdrehung der Laufrollen 18 in Richtung (Teller-) Feder 4 verlassen die Laufrollen 18 die Vertiefungen 11 und der Aktor verbleibt in der nun optimal eingestellten axialen Position.

Die offene Bremsstellung ist erreicht, wenn die Laufrollen 18 über die Druckstifte 16 und damit den Krafteinleitungspunkt der Feder 4 gedreht sind und durch das damit eingestellte Hebelverhältnis 0 keine Kraft mehr auf die Betätigungsstifte 17 und den Bremsbelag 13 ausgeübt wird.

Am federseitigen Ende der Hebel 2, das analog der ersten Ausführungsform über die Druckstifte 16 hinausragt, befindet sich ein weiterer Anschlag, der zum Nachstellen der Bremse zum Beispiel bei temperaturbedingter Ausdehnung der Bremsbeläge 13 oder der Bremsscheibe 12 dient.

Zwischen dem Krafteinleitungspunkt der Feder 4 und dem federseitigen Anschlag ist die Wppkurve des Hebels 2 so gestaltet, dass die Bremsbeläge 13 aktiv von der Bremsscheibe 12 weg gezogen werden, wenn die Laufrollen 18 in diesen Bereich verdreht werden (negatives Hebelverhältnis). Die aktive Öffnungsfunktion der Radbremse 1 kann auch wie bei der ersten Ausführungsform mittels federbelasteten Bremsbelägen 13 realisiert werden.

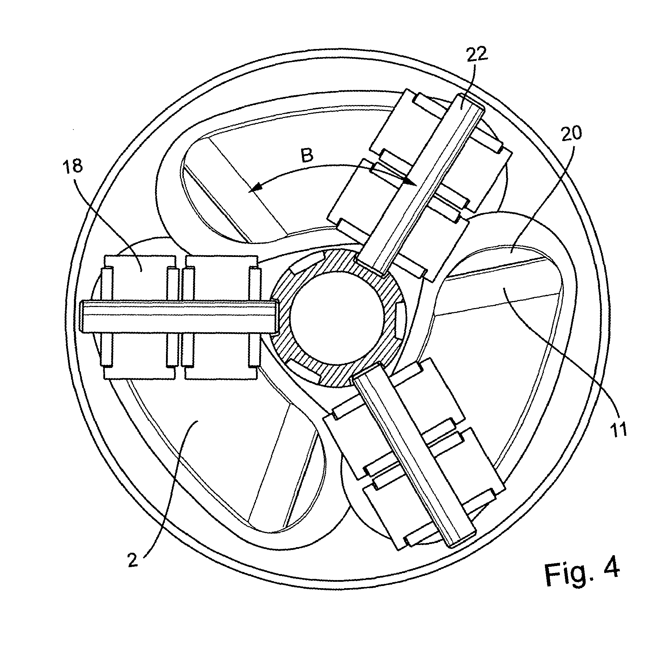

In der Figur 4 ist in eine Draufsicht gezeigt, wobei die Bewegungsrichtung B für das Ein- bzw. Ausrücken gezeigt ist. Die Laufrollen 18 werden in Richtung des Pfeils B durch Verdrehen des Trägerrades 19 verlagert, so dass die Hebel 2 entsprechend verschwenkt werden.

Die bei der ersten Ausführungsform aufgezählten Vorteile sind selbstverständlich auch bei der zweiten Ausführungsform gegeben und werden an dieser Stelle nicht wiederholt.

Mit der vorliegenden Erfindung ist es möglich eine sehr kompakte Bremsbetätigungsvorrichtung zu schaffen, die einen nur geringen Energiebedarf aufweist. Die vorliegende Erfindung schafft somit eine Aktorik zur elektromechanischen Betätigung einer Kraftfahrzeugbetriebsbremse inklusive Parkstellung, wobei eine aktive und schnelle Öffnungsmöglichkeit mittels Hebeleinrücker und einer Verschleißnachstellung realisierbar ist.

Durch die vorliegende Erfindung entsteht ein bauraumkompatibles (Bremssattel) energiesparendes elektromechanisches Bremssystem.

### Bezugszeichenliste

- 1: Radbremse
- 2: Hebel
- 3: Bremssattel
- 4: Feder
- 5: Laufwagen
- 6: Spindel
- 7: Elektromotor
- 8: Hebelende
- 9: Rolle
- 10: Gestell
- 11: Vertiefung
- 12: Bremsscheibe
- 13: Bremsbelag
- 14: Verschleißnachstellung
- 15: Getriebe
- 16: Druckstift
- 17: Betätigungsstift
- 18: Laufrolle
- 19: Trägerrad
- 20: Anschlag
- 21: Feingewinde
- 22: Achse
- 23: Dichtung
- 24: Axiallager
- A: Radachse
- B: Bewegungsrichtung

## Patentansprüche

1. Bremsbetätigungsvorrichtung, insbesondere zur Betätigung einer Radbremse (1) eines Kraftfahrzeuges, mit mindestens einer Feder (4), deren Federkraft zur wahlweisen Betätigung der Radbremse (1) mittels einer zugeordneten mechanischen Kraftübertragungsstrecke auf die Radbremse (1) übertragbar ist, wobei zur Modulation einer Bremskraft ein Hebel (2) als Teil der Kraftübertragungsstrecke verschwenkbar ausgebildet ist.

2. Bremsbetätigungsvorrichtung nach Anspruch 1, **dadurch gekennzeichnet, dass** die Betätigung der Radbremse (1) durch einen innerhalb eines Bremssattels (3) angeordneten linearen Hebeleinrücker erfolgt.

3. Bremsbetätigungsvorrichtung nach Anspruch 1 oder 2, **dadurch gekennzeichnet, dass** durch Veränderung der Längen der wirksamen Hebelarme am Hebel (2) die Bremskraft der Radbremse (1) veränderbar ist.

4. Bremsbetätigungsvorrichtung nach einem der Ansprüche 1 bis 3, **dadurch gekennzeichnet, dass** der Hebel (2) mittels eines Laufwagens (5) an einem Gestell (10) derart abgestützt ist, dass bei einer Verlagerung des Laufwagens (5) in Hebellängsrichtung ein Hebeldrehpunkt entsprechend verschoben wird.

5. Bremsbetätigungsvorrichtung nach Anspruch 4, **dadurch gekennzeichnet, dass** die Verlagerung des Laufwagens (5) mittels einer Spindel (6) erfolgt, die von einem Elektromotor (7) mittels eines Getriebes (15) angetrieben ist.

6. Bremsbetätigungsvorrichtung nach Anspruch 4 oder 5, **dadurch gekennzeichnet, dass** der Laufwagen (5) hebelseitig eine Rolle (9) aufweist, die den Kontakt zum Hebel (2) darstellt.

7. Bremsbetätigungsvorrichtung nach einem der Ansprüche 4 bis 6, **dadurch gekennzeichnet, dass** der Laufwagen (5) gestellseitig zwei weitere Rollen aufweist, die die Abstützung gegenüber dem Gestell (10) darstellen.

8. Bremsbetätigungsvorrichtung nach Anspruch 6 oder 7, **dadurch gekennzeichnet, dass** der Hebel (2) bremsbelagseitig eine Vertiefung (11) aufweist, in der die Rolle (9) in einem stromlosen Zustand des Elektromotors (7) festgehalten ist.

9. Bremsbetätigungsvorrichtung nach einem der Ansprüche 1 bis 8, **dadurch gekennzeichnet, dass** der Hebel (2) direkt oder über eine Verschleißnachstellung (14) auf den Bremsbelag (13) einwirkt.

10. Bremsbetätigungsvorrichtung nach einem der Ansprüche 1 bis 9, **dadurch gekennzeichnet, dass** als Feder (4) eine Druckfeder vorgesehen ist.

11. Bremsbetätigungsvorrichtung nach einem der Ansprüche 4 bis 10, **dadurch gekennzeichnet, dass** am federseitigen Hebelende (8) des Hebels (2) eine Verlängerung über einen Krafteinleitungspunkt der Feder (4) hinaus vorgesehen ist, derart, dass, falls der Laufwagen (5) im Bereich der Verlängerung positioniert ist, der Hebel (2) einen zugeordneten Bremsbelag (13) von einer Bremsscheibe (12) weg zieht.

12. Bremsbetätigungsvorrichtung nach einem der Ansprüche 4 bis 11, **dadurch gekennzeichnet, dass** der Bremsbelag (13) der Radbremse (1) federbelastet aufgedrückt ist, falls der Laufwagen (5) an einem Krafteinleitungspunkt der Feder (4) am Hebel (2) positioniert ist.

13. Bremsbetätigungsvorrichtung nach einem der Ansprüche 1 bis 12, **dadurch gekennzeichnet, dass** für jede Radbremse (1) am Kraftfahrzeug die Bremskraft individuell modulierbar ist.
